# EUROPEAN PATENT SPECIFICATION

(11) **EP 4 076 267 B1**
(45) Date of publication and mention of the grant of the patent: **24.04.2024**
(21) Application number: 20839144.1
(22) Date of filing: 16.12.2020
(51) Int. Cl.: A61C 8/00

(54) **ANCHORAGE DEVICE FOR DENTAL PROSTHESES**
VERANKERUNGSVORRICHTUNG FÜR ZAHNPROTHESEN
DISPOSITIF D'ANCRAGE POUR PROTHÈSES DENTAIRES

(30) Priority: 18.12.2019 IT 201900024478
(43) Date of publication of application: 26.10.2022
(73) Proprietor: Bio Implants Research & Development Srl, 20129 Milano (IT)
(72) Inventor: DI GIULIO, Giancarlo, 20129 Milano (IT)
(74) Representative: Stucovitz, Alessandro
(86) International application number: PCT/IB2020/062018
(87) International publication number: WO 2021/124142

(56) References cited:
- US-A- 4 016 651
- US-A1- 2010 312 248

## Description

The present invention relates to an anchoring device for dental prostheses.

It is known, in the technical sector of dental prostheses, that there exists the need to provide screws, which are screwed into the jaw bone, in order to provide support for the stump pin which is to be covered by the prosthesis which reproduces the original natural tooth.

A particular zone which is used for the prosthesis implant consists of the so-called upper maxillary sinus, namely that hollow recess in the upper jaw where the screw must be applied.

In many cases, in fact, the upper jaw bone part which is situated underneath the sinus (also referred to below as "subsinus bone"), onto which the screw is screwed, has a small thickness which is not sufficient to ensure the stability over time of the screw, and therefore of the entire prosthesis, which may move, causing major discomfort for the patient.

Examples of the prior art generally relating to intraosseous screws for dental implants are described in US 2010/312248 and US 4,016,651.

US4016651 A discloses a device designed for anchoring an artificial tooth to a lower jaw bone, including an intraosseous screw designed to be screwed in a tapped hole through the jaw bone, with a lower end of the screw protruding from the lower hard tissue of the jaw bone to form a protruded screw portion, wherein an auxiliary nut element is screwed onto the lowermost end of the protruded screw portion. The screw is further provided with an upper protruded screw portion, adapted to be protruded from the upper surface of the jaw bone and a nut element is threaded in the upper protruded portion of the screw so that the underside of the nut element may be tightly connected to the upper side of the jaw bone and an artificial tooth may be fixed securely into the upper portion of the nut element.

In both cases the screws and the respective anchoring means are necessarily fastened to the bone to be treated.

The known solutions therefore have the drawback of being able to be used only for jaw bones with a thickness sufficient to allow anchoring of the screws and therefore cannot be used in all those cases which require anchoring to the upper jaw bone part situated underneath the sinuses, which often has a small thickness, not sufficient for ensuring secure gripping of the screws and therefore the stability over time of the prosthesis. The technical problem which is posed, therefore, is that of providing an anchoring device for dental prostheses of the upper dental arch which must be anchored to the jaw bone part situated underneath the upper maxillary sinuses, whereby said anchoring must be able to ensure a high degree of stability over time of the said prosthesis also in the case of a small thickness of the bone underneath the sinus.

In connection with this problem, it is also required that this device should have small dimensions, be easy and inexpensive to produce and assemble and be able to be easily implanted in any patient, reducing the application and healing time. These results are obtained according to the present invention by an anchoring device for dental prostheses according to the characteristic features of Claim 1.

Such a device comprises: a plurality of intraosseous screws, each provided with a predefined thread and with a bottom shank for operating the said screw, a crosspiece comprising a plurality of nuts, in a number corresponding to the number of intraosseous screws, connected together in the transverse direction by means of spacers, each nut having a female thread corresponding to the thread of a respective intra-osseous screw; and a plurality of lock nuts, in a number corresponding to the number of intraosseous screws and each provided with a female thread in turn corresponding to the thread of the respective screw. The device allows stable and permanent anchoring to the upper jaw bone, for fixing of dental prostheses of the upper dental arch, owing to the fact that the crosspiece is designed to be inserted and housed, during use, inside a maxillary sinus, each screw being configured to be inserted, during use, inside a respective hole through the bone underneath the maxillary sinus so that it projects beyond the bone and is inserted inside the respective nut of the crosspiece so as to cause mating together of the respective threads, and so that the bottom operating shank and bottom part of the screw thread, opposite to that engaged with the respective nut of the crosspiece, project at the bottom from the lower outer cortex of the bone in order to allow screwing of the screw onto the nut of the crosspiece by means of said bottom operating shank and screwing of the lock nut on the respective intraosseous screw, respectively.

The bottom shank of each screw may advantageously have a shape suitable for engagement with a corresponding operating tool, in particular with a polygonal cross-section or a grooved profile. The tip of a screw may be preferably frustoconical so as to favour the entry of the screw into the nut and the male/female engagement of the respective threads.

Each lock nut has preferably, on a bottom edge thereof, at least two incisions which are designed for engagement with corresponding teeth of an operating spanner.

According to a particularly preferred embodiment, the spacers (111) have dimensions and are configured to allow the bending of the crosspiece in a direction substantially perpendicular to the transverse direction so as to arrange the nuts in different planes. In this way it is possible to ensure the possibility of adapting easily the anchoring device to different forms of the maxillary sinus.

In particular, the spacers may have a circular cross-section with a diameter of between 1.5 and 4.0 mm, preferably between 2.4 and 3.6 mm, and/or may be made of Gr 2/4 titanium or an alloy thereof. The present invention also relates to a kit which comprises an anchoring device according to the invention and a spanner for operating the lock nuts and a dental prosthesis assembly comprising an anchoring device and at least one dental prosthesis configured for stable engagement with a screw of the anchoring device.

Further details may be obtained from the following description of a non-limiting example of embodiment of the subject of the present invention provided with reference to the attached drawings in which:
Figure 1: shows a perspective view of a first embodiment of an intraosseous screw with nut and lock nut for use in a device according to the present invention;
Figure 2: shows a perspective view of an example of embodiment of a multiple crosspiece according to the present invention;
Figure 3: shows an exploded perspective view of a second example of embodiment of the device according to the present invention;
Figure 4: shows a front view of the device according to Fig. 3 in the assembled condition;
Figure 5: shows a view, from below, of the device according to Fig. 4;
Figure 6: shows a perspective, partially cross-sectioned, side view of the device according to Fig. 3 applied to a maxillary sinus;
Figure 7: shows a perspective view, from above, of the device according to Fig. 3 applied to a sinus;
Figure 8: shows a front view of a second example of embodiment of the intraosseous screw according to the invention;
Figure 9: shows a front view of a tool for operating the lock nut forming part of the device according to the invention; and
Figure 10: shows a view, from above, of the operating tool according to Fig. 9; and
Figure 11: shows a cross-sectional view of a device according to the invention applied to a maxillary sinus, with bending of the spacers between nuts of the crosspiece.

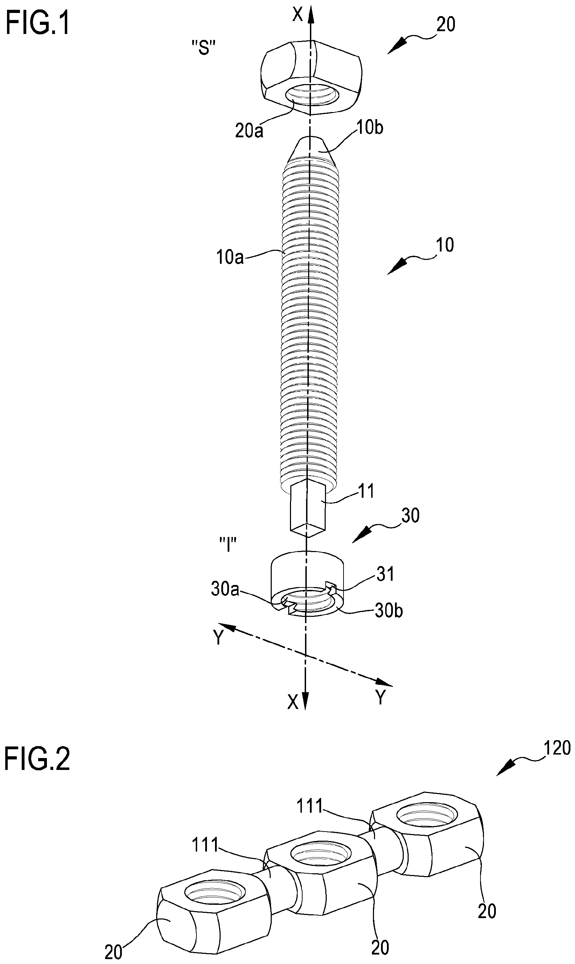

As shown in Fig. 1 and assuming solely for easier description and without a limiting meaning a set of three reference axes, i.e. in a longitudinal direction X-X corresponding to the longitudinal lengthwise axis of the screw, transverse axis Y-Y along the width of the anchoring nut; and a top part "S" corresponding to the part of the device engaging with the inner cortex 1c of a maxillary sinus, and a bottom part "I" situated opposite to the top part, corresponding to the operating part of the screw, Figure 1 shows the following elements for use in the anchoring device according to the invention:
- an intraosseous screw 10 provided with a predefined thread 10a and a bottom shank 11 for operating the said screw;
- a nut 20 with female thread 20a corresponding to the thread 10a of the screw 10;
- a lock nut 30 with female thread 30a in turn corresponding to the thread 10a of the screw 10.

In detail, the bottom shank 11 of the screw has preferably a polygonal, square, hexagonal or similar cross-section, or splined profile, designed to favour the engagement with a corresponding operating tool (not shown).

Preferably, the screw 10 has frustoconical tip 10b designed to favour the entry of the screw into the nut and the male/female engagement of the respective threads.

The lock nut 30 has a preferably cylindrical shape, but it is also conceivable that it may have a polygonal shape.

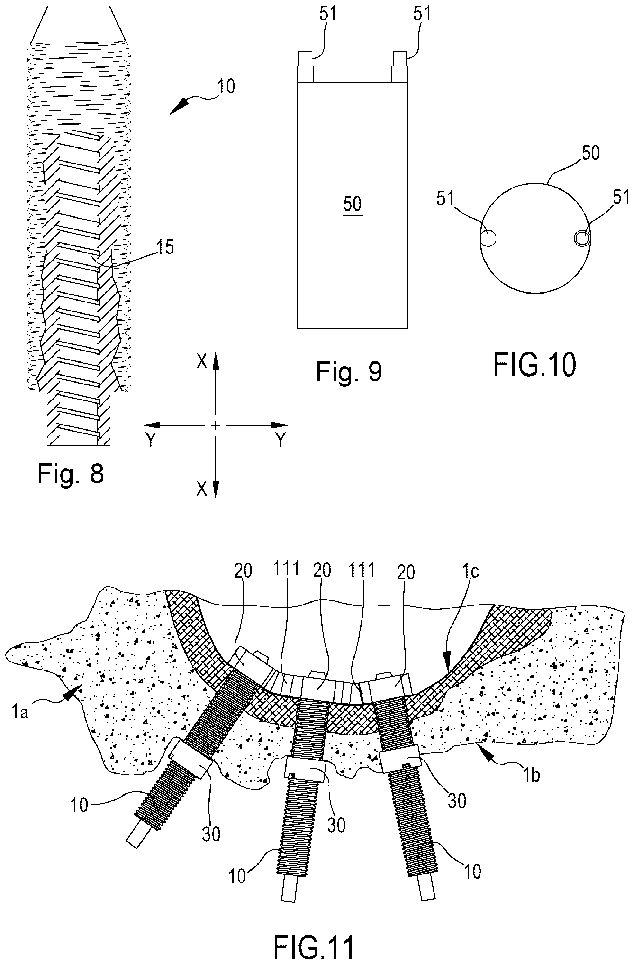

On its edge 30b, arranged at the bottom during use, the lock nut may have at least two incisions 31 which are designed for engagement with corresponding teeth of an operating spanner 50, described below with reference to Figs. 9 and 10.

As shown in Fig. 2, it is envisaged that the nut 20 forms part of a crosspiece 120 which comprises a plurality of nuts 20 connected in the transverse direction Y-Y by means of spacers 111; the number of nuts included in the crosspiece 120 and the length in the transverse direction Y-Y of the spacers may be chosen depending on the spaces available in the maxillary sinus and/or the number of prostheses to be implanted and therefore screws to be applied to the maxillary sinus. Preferred embodiments of the device according to the invention comprise for example two or three nuts connected by spacers to form the crosspiece 120.

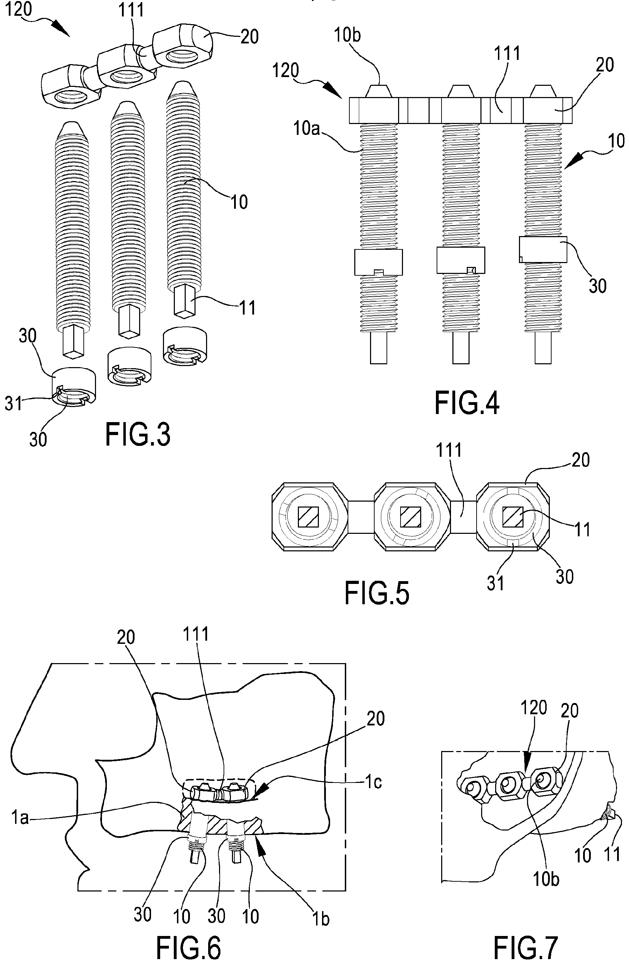

Figs. 3-5 show the details of an example of a crosspiece 120 comprising three nuts, during the various pre-assembly and assembly steps.

Figs. 6-7 show the application of the anchoring device to the maxillary sinus in a procedure which involves:
- uncovering the maxillary sinus 1;
- opening a lateral window in the side thereof;
- forming holes with a longitudinal axis in the subsinus bone la;
- introducing the crosspiece 120 into the sinus;
- inserting each screw 10 into the respective hole of the bone util it encounters the respective nut 20;
- engaging the screw with the nut by screwing the former onto the latter using the operating spanner 50;
- mounting a lock nut 30 on the respective screw and screwing the former onto the latter by means of an operating spanner 50 until the lock nut is tightened onto the outer cortex 1b of the bone 1a with sufficient force to ensure the reaction of the nuts 20 of the crosspiece 120 against the inner cortex 1c of the jaw bone 1a and the required stability of the anchoring device.

The invention envisages (Fig. 8) a further embodiment of the screw 10 which has an internal thread 15 suitable for mating with the thread of a screw of the definitive aesthetic dental prosthesis, which is designed to fix the said prosthesis.

The present invention relates furthermore to a dental prosthesis assembly comprising an anchoring device with a plurality of intraosseous screws 10, a crosspiece 120 with nuts 20 and a plurality of locknuts 30 as described above, and a dental prosthesis configured for stable engagement with at least one screw of the anchoring device.

As shown in Figs. 9-10, the operating spanner 50 has at least two teeth 51 extending outwards in the longitudinal direction X-X and designed to be inserted into the seats 51 of the lock nut 50 so as to allow screwing rotation thereof and tightening onto the jaw bone with a force sufficient to ensure the desired stability of the screw and therefore of the entire anchoring system.

According to the invention it is envisaged that the spacers 111 of the nuts 20 of the crosspiece 120 are preferably made of Gr 2/4 titanium or Gr 5 alloys thereof with a diameter designed to allow the bending thereof in a direction substantially perpendicular to the transverse direction Y-Y so as to position the nuts in different planes, each of which are substantially parallel, during use, to a surface of the inner cortex 1c of the upper subsinus jaw bone, on which it rests as shown in Fig.11.

In preferred embodiments the diameter of the spacer is comprised between 1.5 and 4.0 mm, preferably between 2.4 and 3.6 mm.

It is therefore clear how the anchoring device offers numerous advantages compared to the prior art, in particular:
- the possibility of obtaining the application in very short healing times of the order of hours as opposed to that which occurs for the devices of the prior art which involve the use of an autologous or heterologous bone and which normally require at least 30 days for consolidation;
- the possibility of application also to very thin subsinus bones with optimum results in terms of stability since the chewing forces are distributed in particular over the device, while with the normal devices with a screw screwed solely to the bone, the latter may be deformed, resulting in the instability of the anchorage and the prosthesis.

Although described in connection with a number of embodiments and a number of preferred examples of implementation of the invention, it is understood that the scope of protection of the present patent is determined solely by the claims below.

## Claims

1. Device for anchoring to the upper jaw bone (1) dental prostheses of the upper dental arch, comprising:
- a plurality of intraosseous screws (10) each provided with a predefined thread (10a) and with a bottom shank (11) for operating the screw;
- a crosspiece (120) comprising a plurality of nuts (20), in a number corresponding to the number of intraosseous screws (10) and connected together in the transverse direction (Y-Y) by means of spacers (111), each nut (20) having a female thread (20a) corresponding to the thread (10a) of a respective intraosseous screw (10);
- a plurality of lock nuts (30), in a number corresponding to the number of intraosseous screws and each provided with a female thread (30a) in turn corresponding to the thread (10a) of the respective screw (10);
wherein:
the crosspiece (120) is designed to be inserted and housed, during use, in a maxillary sinus; each screw (10) is configured to be inserted, during use, inside a respective hole through the bone (1) underneath the maxillary sinus so that it projects beyond the inner cortex (1c) of the bone and is inserted inside the respective nut (20) of the crosspiece (120) so as to cause mating together of the respective threads and so that the bottom operating shank (11) and a bottom part of the thread (10a) of the screw (10), opposite to that engaged with the respective nut (20) of the crosspiece (120), project at the bottom from the outer cortex (1b) of the bone thereby allowing screwing of the screw onto the nut of the crosspiece by means of said bottom operating shank and screwing of the lock nut onto the corresponding intraosseous screw, respectively.

2. Device according to Claim 1, **characterized in that** the bottom shank (11) of one or more screws has a shape suitable for engagement with a corresponding operating tool, in particular with a polygonal cross-section or a grooved profile.

3. Device according to any one of the preceding claims, **characterized in that** at least one - preferably each - screw (10) has a frustoconical tip (10b) designed to favour the entry of the screw into the nut and the male/female engagement of the respective threads.

4. Device according to any one of the preceding claims, **characterized in that** at least one - preferably each - lock nut (30) has on an edge (30b) thereof, arranged during use at the bottom, at least two incisions (31) suitable for engagement with corresponding teeth of an operating spanner (50) .

5. Device according to one of the preceding claims, **characterized in that** the spacers (111) have dimensions and are configured to allow the bending of the crosspiece (120) in a direction substantially perpendicular to the transverse direction (Y-Y) so as to arrange the nuts in different planes.

6. Device according to the preceding claim, **characterized in that** the spacers (111) have a circular cross-section with a diameter of between 1.5 and 4.0 mm, preferably between 2.4 and 3.6 mm.

7. Device according to the preceding Claim 5 or 6, **characterized in that** the spacers (111) are made of Gr 2/4 titanium or an alloy thereof.

8. Kit **characterized in that** it comprises an anchoring device according to any one of Claims 1 to 9 and a spanner (50) for operating the lock nuts (30) .

9. Kit according to the preceding claim, **characterized in that** the operating spanner (50) has at least two teeth (51) extending outwards in the longitudinal direction (X-X) and designed to be inserted in incisions (51) in the lock nut (30) so as to allow screwing rotation thereof and tightening on the jaw bone.

10. Dental prosthesis assembly comprising an anchoring device according to one of Claims 1-9 and at least one dental prosthesis configured for stable engagement with a screw of the anchoring device.

## Patentansprüche

1. Vorrichtung zur Verankerung von Zahnprothesen des oberen Zahnbogens am Oberkieferknochen (1), umfassend:
- eine Vielzahl von intraossären Schrauben (10), die jeweils mit einem vordefinierten Gewinde (10a) und mit einem unteren Schaft (11) zur Betätigung der Schraube versehen sind;
- einen Querträger (120), der eine Vielzahl von Muttern (20) umfasst, deren Anzahl der Anzahl der intraossären Schrauben (10) entspricht und die in der Querrichtung (Y-Y) mittels Abstandshaltern (111) miteinander verbunden sind, wobei jede Mutter (20) ein Innengewinde (20a) aufweist, das dem Gewinde (10a) einer entsprechenden intraossären Schraube (10) entspricht;
- eine Vielzahl von Sicherungsmuttern (30), deren Anzahl der Anzahl der intraossären Schrauben entspricht und die jeweils mit einem Innengewinde (30a) versehen sind, das wiederum dem Gewinde (10a) der jeweiligen Schraube (10) entspricht; wobei:
der Querträger (120) so gestaltet ist, dass er während der Verwendung in eine Kieferhöhle eingesetzt und dort aufgenommen wird;
jede Schraube (10) so konfiguriert ist, dass sie während der Verwendung in ein entsprechendes Loch durch den Knochen (1) unterhalb der Kieferhöhle eingeführt wird, so dass sie über die innere Kortikalis (1c) des Knochens hinausragt und in die entsprechende Mutter (20) des Querstücks (120) eingeführt wird, um ein Zusammenpassen der entsprechenden Gewinde zu bewirken, und so, dass der untere Arbeitsschaft (11) und ein unterer Teil des Gewindes (10a) der Schraube (10), der dem mit der jeweiligen Mutter (20) des Querstücks (120) in Eingriff stehenden Teil gegenüberliegt, unten aus der äußeren Kortikalis (1b) des Knochens herausragen, wodurch das Aufschrauben der Schraube auf die Mutter des Querstücks mittels des unteren Betätigungsschaftes und das Aufschrauben der Sicherungsmutter auf die entsprechende intraossäre Schraube ermöglicht wird.

2. Vorrichtung nach Anspruch 1, **dadurch gekennzeichnet, dass** der untere Schaft (11) einer oder mehrerer Schrauben eine für den Eingriff mit einem entsprechenden Betätigungswerkzeug geeignete Form aufweist, insbesondere mit einem polygonalen Querschnitt oder einem Rillenprofil.

3. Vorrichtung nach einem der vorhergehenden Ansprüche, **dadurch gekennzeichnet, dass** mindestens eine - vorzugsweise jede - Schraube (10) eine kegelstumpfförmige Spitze (10b) aufweist, die so gestaltet ist, dass sie das Eindringen der Schraube in die Mutter und den Eingriff der jeweiligen Gewinde ineinander begünstigt.

4. Vorrichtung nach einem der vorhergehenden Ansprüche, **dadurch gekennzeichnet, dass** mindestens eine - vorzugsweise jede - Sicherungsmutter (30) an einem Rand (30b) derselben, der während der Benutzung unten angeordnet ist, mindestens zwei Einschnitte (31) aufweist, die zum Eingriff mit entsprechenden Zähnen eines Betätigungsschlüssels (50) geeignet sind.

5. Vorrichtung nach einem der vorhergehenden Ansprüche, **dadurch gekennzeichnet, dass** die Abstandshalter (111) so dimensioniert und konfiguriert sind, dass sie das Biegen des Querträgers (120) in einer Richtung im Wesentlichen senkrecht zur Querrichtung (Y-Y) ermöglichen, um die Muttern in verschiedenen Ebenen anzuordnen.

6. Vorrichtung nach dem vorhergehenden Anspruch, **dadurch gekennzeichnet, dass** die Abstandshalter (111) einen kreisförmigen Querschnitt mit einem Durchmesser zwischen 1,5 und 4,0 mm, vorzugsweise zwischen 2,4 und 3,6 mm, aufweisen.

7. Vorrichtung nach dem vorhergehenden Anspruch 5 oder 6, **dadurch gekennzeichnet, daß** die Abstandshalter (111) aus Titan Gr 2/4 oder einer Legierung davon hergestellt sind.

8. Bausatz, **dadurch gekennzeichnet, dass** er eine Verankerungsvorrichtung nach einem der Ansprüche 1 bis 9 und einen Schraubenschlüssel (50) zur Betätigung der Kontermuttern (30) umfasst.

9. Bausatz nach dem vorhergehenden Anspruch, **dadurch gekennzeichnet, dass** der Betätigungsschlüssel (50) mindestens zwei Zähne (51) aufweist, die sich in der Längsrichtung (X-X) nach außen erstrecken und dazu bestimmt sind, in Einschnitte (51) der Kontermutter (30) eingeführt zu werden, um deren Drehung und das Festziehen auf dem Backenbein zu ermöglichen.

10. Zahnersatzanordnung, umfassend eine Verankerungsvorrichtung nach einem der Ansprüche 1-9 und mindestens einen Zahnersatz, der für einen stabilen Eingriff mit einer Schraube der Verankerungsvorrichtung konfiguriert ist.

## Revendications

1. Dispositif d'ancrage à l'os de mâchoire supérieure (1) de prothèses dentaires de l'arcade dentaire supérieure, comprenant :
- une pluralité de vis intraosseuses (10) pourvues chacune d'un filetage prédéfini (10a) et d'une tige inférieure (11) pour un actionnement de la vis ;
- une traverse (120) comprenant une pluralité d'écrous (20), en nombre correspondant au nombre de vis intraosseuses (10) et reliés entre eux dans la direction transversale (Y-Y) au moyen d'entretoises (111), chaque écrou (20) ayant un filetage femelle (20a) correspondant au filetage (10a) d'une vis intraosseuse (10) respective ;
- une pluralité de contre-écrous (30), en nombre correspondant au nombre de vis intraosseuses et chacun pourvu d'un filetage femelle (30a) correspondant à son tour au filetage (10a) de la vis (10) respective ;
dans lequel :
la traverse (120) est conçue pour être insérée et logée, pendant l'utilisation, dans un sinus maxillaire ; chaque vis (10) est configurée pour être insérée, pendant l'utilisation, à l'intérieur d'un trou respectif à travers l'os (1) sous le sinus maxillaire de sorte qu'elle fasse saillie au-delà du cortex interne (1c) de l'os et soit insérée à l'intérieur de l'écrou (20) respectif de la traverse (120) de façon à amener l'accouplement mutuel des filetages respectifs et de sorte que la tige d'actionnement inférieure (11) et une partie inférieure du filetage (10a) de la vis (10), opposée à celle en prise avec l'écrou (20) respectif de la traverse (120), fassent saillie en bas à partir du cortex externe (1b) de l'os, permettant ainsi, respectivement, le vissage de la vis sur l'écrou de la traverse au moyen de ladite tige d'actionnement inférieure et le vissage du contre-écrou sur la vis intraosseuse correspondante.

2. Dispositif selon la revendication 1, **caractérisé en ce que** la tige inférieure (11) d'une ou de plusieurs vis a une forme convenant à une mise en prise avec un outil d'actionnement correspondant, en particulier ayant une section polygonale ou un profil rainuré.

3. Dispositif selon l'une quelconque des revendications précédentes, **caractérisé en ce qu'**au moins une - de préférence chaque - vis (10) a une pointe tronconique (10b) destinée à favoriser l'entrée de la vis dans l'écrou et la mise en prise mâle/femelle des filetages respectifs.

4. Dispositif selon l'une quelconque des revendications précédentes, **caractérisé en ce qu'**au moins un - de préférence chaque - contre-écrou (30) a sur un bord (30b) de celui-ci, disposées pendant l'utilisation en bas, au moins deux incisions (31) convenant à une mise en prise avec des dents correspondantes d'une clé d'actionnement (50).

5. Dispositif selon l'une des revendications précédentes, **caractérisé en ce que** les entretoises (111) ont des dimensions et sont configurées pour permettre le pliage de la traverse (120) dans une direction sensiblement perpendiculaire à la direction transversale (Y-Y) de façon à disposer les écrous dans des plans différents.

6. Dispositif selon la revendication précédente, **caractérisé en ce que** les entretoises (111) ont une coupe circulaire avec un diamètre entre 1,5 et 4,0 mm, de préférence entre 2,4 et 3,6 mm.

7. Dispositif selon la revendication 5 ou 6 précédente, **caractérisé en ce que** les entretoises (111) sont constituées de titane Gr 2/4 ou d'un alliage de celui-ci .

8. Kit, **caractérisé en ce qu'**il comprend un dispositif d'ancrage selon l'une quelconque des revendications 1 à 9 et une clé (50) pour actionner les contre-écrous (30).

9. Kit selon la revendication précédente, **caractérisé en ce que** la clé d'actionnement (50) a au moins deux dents (51) s'étendant vers l'extérieur dans la direction longitudinale (X-X) et conçues pour être insérées dans des incisions (51) du contre-écrou (30) de façon à permettre sa rotation par vissage et son serrage sur l'os de mâchoire.

10. Ensemble de prothèses dentaires comprenant un dispositif d'ancrage selon l'une des revendications 1 à 9 et au moins une prothèse dentaire configurée pour une mise en prise stable avec une vis du dispositif d'ancrage.
